# EUROPÄISCHE PATENTSCHRIFT

(11) **EP 1 450 458 B1**
(45) Veröffentlichungstag und Bekanntmachung des Hinweises auf die Patenterteilung: **09.06.2010**
(21) Anmeldenummer: 04001300.5
(22) Anmeldetag: 22.01.2004
(51) Int. Cl.: H02B 13/025

(54) **Baueinheit für die Aufnahme von Absorberelementen für Schaltanlage**
Absorbing-element assembly for switchgear
Dispositif d'éléments-absorbeurs pour installation de commutation

(30) Priorität: 21.02.2003 DE 10307495; 27.03.2003 DE 10313723
(43) Veröffentlichungstag der Anmeldung: 25.08.2004
(73) Patentinhaber: Ormazabal Anlagentechnik GmbH, 47804 Krefeld (DE)
(72) Erfinder: Glasmacher, Peter, 41352 Korschenbroich (DE)
(74) Vertreter: Cohausz & Florack

(56) Entgegenhaltungen:
- DE-A- 19 646 547
- US-A- 4 364 760
- US-A- 4 455 336

## Beschreibung

Die Erfindung bezieht sich auf eine Baueinheit für die Aufnahme mindestens eines Elements für die Absorption oder Dämpfung austretender heißer Gase verursacht durch einen Lichtbogen in elektrischen Funktionseinheiten der Hoch- und Mittelspannung, insbesondere in Schaltanlagen der Hoch- oder Mittelspannung.

Eine Baueinheit mit den Merkmalen des Oberbegriffes des Anspruchs 1 ist aus DE-A-196 46 547 bekannt.

Aus der Schrift DE 196 45 304 C2 ist eine Patrone als Dämpfungselement bekannt geworden, welche am Ende eines Druckentlastungskanals an einer ansonsten gekapselten Mittelspannungsschaltanlage angeordnet ist. Die dämpfenden Elemente in der Patrone sind Metalldeflektoren, die als Winkelbleche versetzt im Weg abströmender Gase befestigt sind.

Eine andere Baueinheit ist aus der DE 198 58 952 C1 bekannt. In dieser Baueinheit ist ein definierter Abströmweg für heiße Gase vorhanden und dort eine Kammer ausgebildet, die höchstens bis zu 70 % ihres Volumens mit losen, vorzugsweise kugelförmigen Dämpfungskörpern gefüllt ist. Die Dämpfungskörper bestehen aus Kunststoff und werden durch das strömende Gas aufgewirbelt, wodurch das Gas gekühlt, entionisiert und gebremst wird.

Schaltanlagenräume werden oft in Bereichen errichtet, in denen eine Begehung der Druckentlastungsbereiche durch Personen möglich ist. Durch gestiegene Anforderungen an elektrische Anlagen können bekannte Dämpfungseinrichtungen nur noch begrenzt eingesetzt werden.

Mit der Steigerung der elektrischen Leistung in elektrischen Anlagen, wie Leistungsschaltern, Sammelschienenräumen, Stromwandlern, Transformatoren (hier im weiteren allgemein als Funktionseinheiten bezeichnet) usw. können bekannte Dämpfungseinrichtungen nur noch begrenzt eingesetzt werden. So können, beispielsweise bei Auftreten von Bemessungs-Kurzzeitströmen ≥ 25 kA für 1sec Kunststoff-Dämpfungskörper oder Metalldeflektoren kaum noch Schutzwirkung erzielen. Unter der Wirkung des Störlichtbogens können sie schmelzen und/oder aus den Verankerungen gerissen werden, so dass die Dämpfungselemente aus der Öffnung des Druckentlastungskanals nach außen treten können und weiterhin eine Gefahr darstellen.

Es ist die Aufgabe der Erfindung, eine Baueinheit für die Aufnahme mindestens eines Elements für die Absorption oder Dämpfung austretender heißer Gase, insbesondere verursacht durch einen in einer Funktionseinheit bei Mittelspannung entstehenden Störlichtbogen vorzuschlagen, die einen gesteigerten Schutz gegen austretende heiße Gase bietet.

Allgemein soll hierbei und für die weitere Beschreibung der Begriff Funktionseinheit (unabhängig davon, ob für luft- und gasisolierte Anlagen) stellvertretend stehen für:
- ein Schaltfeld oder mehrere Schaltfelder,
- eine oder mehrere Schaltanlagen (Schaltanlagenblöcke),
- einen oder mehrere Schotträume in Schaltfeldern oder Schaltanlagenblöcken,
- begehbare und nicht begehbare Schaltanlagenräume und Stationen sowie Schotträume in diesen.

Die Lösung der Aufgabe wird in den Merkmalen des Hauptanspruchs angegeben.

Weitere vorteilhafte Ausgestaltungen sind in den abhängigen Ansprüchen formuliert.

Der Vorteil der Baueinheit liegt darin, dass keine beweglichen Teile, keine Kunststoffe und Metalle verwendet werden, die bei den hohen Drücken und hohen Temperaturen zerstört werden oder sich zerlegen.

Ein weiterer Vorteil der Erfindung liegt darin, das im Störlichtbogenfall der Druck in der Schaltanlage bzw. in den Schaltfeldern und im Raum, der die Anlage umgibt, erheblich reduzierbar ist.

Durch den Einsatz hochwertiger Industriekeramik wird ein robustes Material verwendet, welches ohne Einsatz beweglicher Teile einen wirksamen Schutz gegen austretende heiße Gase bietet und auch geeignet ist, im Gerät aufgeheizte Luft unter Kühlwirkung abströmen zu lassen.

Die Vorteile des vorgeschlagenen Gegenstandes liegen in folgendem: Der Gegenstand der Erfindung kann, im Vergleich zu einer elektrischen Funktionseinheit, insbesondere einer Schaltanlage ohne Störlichtbogenabsorber, den auftretenden Druck im Störlichtbogenfall im Schaltanlagenraum reduzieren, die Kühlung der durch Stromwärme aufgeheizter Abluft sicherstellen, den Schutz gegen die Auswirkungen des Fehlers auf das Gebäude, Personen sowie der technischen Ausrüstungen zu verbessern, und helfen die räumlichen Möglichkeiten effektiver zu nutzen.

Die Baueinheit ist auch für den Fall der Nachrüstung mit Störlichtbogenabsorbern zur Verbesserung der Druckverhältnisse im Störlichtbogenfall einsetzbar.

Zur Kühlung der heißen Gase im Falle eines Störlichtbogens durch einen inneren Fehler in einer Funktionseinheit werden keramische Absorberelemente (Wabenkörper) eingesetzt. Als Material kommen Porzellan, Al₂O₃, SiC-Keramik, Saponit und andere auch als Wärmetauscherkeramik eingesetzte Stoffe in Frage.

Die Baueinheit kann in verschiedenen Ausführungsformen von Funktionseinheiten zum Einsatz kommen, beispielsweise an bzw. in luftisolierten Schaltfeldern und Schaltanlagen, sowie gasisolierten Schaltfeldern und Schaltanlagen, in Kompaktstationen oder begehbaren und nicht begehbaren Schaltanlagenräumen und Schalt-Stationen. Hier können Schaltanlagen, Stationsteilbereiche, Stationstüren, Raumübergänge und Raumaustrittsöffnungen mit der Baueinheit bestückt werden. Im folgenden soll durchgängig der Begriff ,Funktionseinheit' verwendet werden, was jedoch nicht heißt, dass der Einsatz der Baueinheit allein nur für eine einzige Funktionseinheit oder ein Schaltfeld vorgesehen sein soll. Mit dem Begriff Funktionseinheit soll stellvertretend auch vermittelt werden, dass die Baueinheit für einen Schottraum, für einen Schaltanlagenraum oder für eine gesamte Schaltanlage mit mehreren Schaltfeldern verwendbar ist und nach der jeweiligen Gegebenheit anpassbar ist.

Die Positionierung der Baueinheit ist je nach Funktionseinheit unterschiedlich. Die Gasführung kann in verschiedene Richtungen erfolgen, oder in verschiedene Räume hinein (Schaltfeldschottraum, Druckentlastungskanal, Doppelbodenbereich, Kabelkanal, Kabelkeller). Ausschlaggebend für die Wahl der Position und der Gasführung sind die jeweiligen technischen Möglichkeiten einer Funktionseinheit zur Erreichung der maximalen Personensicherheit und die Druckbeständigkeit der Funktionseinheit. Die für den Störlichtbogenabsorber notwendige Bauform der Baueinheit ist auf den jeweiligen Einsatz in einer Funktionseinheit abgestimmt.

Die keramischen Absorberelemente werden durch Halteelemente fixiert. Solche Halteelemente können zum Beispiel sein: mindestens ein gitterförmiges oder gelochtes Halteblech, Halteklammern oder Bänder, die umfangseitig die Absorberelemente umgreifen. Die Halteelemente können aus Einzelteilen bestehen und im Absorbergehäuse befestigt sein, oder sie können auch integraler Bestandteil des Absorbergehäuses sein.

Abgestimmt auf die Dimensionierung der Baueinheit wird die schichtweise Anzahl der Absorberelemente variiert, um ein Brechen der Gesamtabsorberfläche im Störlichtbogenfall zu verhindern. Der Einbau der Absorberelemente in dem Rahmen sollte eine entsprechende thermische Dehnung der gesamten Anordnung während der Aufheizung (durch Stromwärme oder im Störlichtbogenfall) erlauben und so zur Aufnahme der thermischen Kräfte durch die Baueinheit beitragen.

Das wesentliche Element der Baueinheit ist mindestens ein monolithischer keramischer Absorberkörper. Die Kanäle in den Absorberelementen sind so geformt, dass durch ihre große Länge bzw. ihren engen Durchmesser IP-Schutz (Berührungsschutz, Fernhalten von Werkzeugen, Stochersicherheit) vorhanden ist. Alternativ kann zusätzlich oder bei Kanälen mit größerem Durchmesser in den Absorberelementen eine gelochte Abdeckung auf den Absorberelementen angeordnet sein, so dass mit solcher Abdeckung der IP-Schutz gewährleistet ist.

Gelochte Bleche oder Streckmetall-Platten - optional unterhalb und/oder oberhalb der Absorberelemente angeordnet - können vorzugsweise so ausgelegt sein, dass sie zur Optimierung des Druckabbaus beitragen und den Gasaustritt durch die wabenartige Kanalstruktur freigeben. Ein in Strömungsrichtung des Gases zuunterst liegendes Streckmetall (nach Norm DIN 791) kann einem Lichtbogen als Fußpunkt dienen und damit zur Verkürzung des Lichtbogens im Schottbereich beitragen. Gleichzeitig kann mit der Formgebung seiner Maschen dieses Streckmetall zur Steuerung der Strömung und damit des Druckabbaus beitragen. Typischen Dimensionen eines Streckmetalls können etwa folgende sein: Maschenlänge: 6 mm; Maschenbreite: 3,4 mm; Stegbreite: 1,25 mm; Dicke des Streckmetalls: 2 bis 3 mm Stegdicke: 0,5 mm.

Die Haltebleche sollten relativ große Öffnungen haben. Wesentlich ist, dass durch die Halterung genügend mechanische Festigkeit erzeugt wird, um die Absorberkonstruktion zu tragen. Metallisch ausgebildete Halteelemente (Streckmetall oder Halteblech) sollten nicht lackiert sein, um Farbabbrand und zusätzliche Belastung durch gesundheitsgefährdende Gase zu vermeiden.

Die komplette Baueinheit für den Störlichtbogenabsorber kann mit Verschraubungen oder durch Vernietung montiert werden, wobei vorzugsweise die Baueinheit über einen Flansch (vorzugsweise unmittelbar am Rahmen der Baueinheit) an einer Funktionseinheit montierbar ist. Die Montagestelle wird durch den Einsatzbereich der Funktionseinheit bestimmt.

Bei gasisolierten oder luftisolierten Schaltfeldern und Schaltanlagen kann die Baueinheit in der beschriebenen Form auch in besonderen Druckentlastungskanälen verwendet werden. Durch Kombination von Absorberelementen mit unterschiedlichen Kanalanzahlen bei gleicher Durchtrittsfläche, bei Aufbau hinter einander (beispielsweise senkrecht übereinander) und hierzu geradliniger Gasführung wird gleichzeitig der Druckabbau in den Absorberkanälen und die Kühlung der heißen Gase optimiert. Hierbei werden die unteren Absorberelemente mit weniger Kanäle je Element gewählt, die jeweils nächsten darüber angeordneten mit jeweils einem Vielfachen davon. Hierbei wird die Kanalwandstärke so variiert, dass eine nahezu gleiche Durchtrittsfläche für die durchströmenden heißen Gase zur Verfügung steht und die unteren dickwandigeren Kanäle mehr Wärme aufnehmen können.

In gasisolierten Schaltanlagen und Schaltfeldern ist ein mehrstufiger Aufbau von Absorberelementen möglich, wobei die Baueinheit direkt hinter der Berstscheibe des gasisolierten Schaltanlagen- oder Schaltfeldteils positioniert wird und/oder auf der Rückseite oder in einem Druckentlastungskanal.

Der Druckabbau wird durch entsprechende Dimensionierung der Absorberelemente in Bezug auf die Anzahl der Kanäle, der Kanalweiten, der Kanalwandstärken, der hierdurch bedingten Kühloberfläche und der für den Gasaustritt zur Verfügung stehenden freien offenen Fläche angepasst. Die Geometrie der keramischen Absorberelemente, ihre Wabenstruktur und die Kanalweite der senkrechten Kanäle bestimmen den Widerstand des Gasdurchtritts im Störlichtbogenfall. Die Kanäle der Absorberelemente liegen im wesentlichen in Richtung der Ausströmrichtung. Durch die geradlinige Strömung der Gase werden Partikelablagerungen vermieden, die bei einer andersartigen Anordnung zu ungewünschten Druckerhöhungen in der Funktionseinheit im Störlichtbogenfall führen können.

Die Höhe und die Festigkeit der keramischen Absorberelemente ist so dimensioniert, dass bei maximal möglichem Druck die wabenartige Kanalstruktur der Elemente möglichst keinen Schaden nimmt und dennoch eine maximale geometrische Oberfläche zur Kühlung der heißen Gase zur Verfügung steht. Es kann Schadensfälle geben, bei denen auch das Absorbermaterial Schaden nimmt. Es ist daher bei der Konstruktion und der Auswahl des Materials wichtig, dass zerstörtes Absorbermaterial möglichst nicht nach außen austreten kann. Eine Maßnahme kann sein, dass die Dicke eines einteilig ausgebildeten Absorbermaterials so groß gewählt wird, dass ein Störlichtbogen nur eine untere Schicht zerstört und eine obere Schicht unzerstört erhalten bleibt. Eine weitere Maßnahme kann darin liegen, dass mehrere Absorberelemente schichtweise aufeinander gelegt werden. Die Schichtung kann aus Materialien mit abnehmender stofflicher Beständigkeit (in Gasströmungsrichtung) gegen Lichtbogenangriff vorgenommen werden.

Die Wabenstruktur des keramischen Absorberelements ist für den jeweiligen Einsatzfall unterschiedlich gestaltet. So kann zum Beispiel ein Absorberelement mit einer Länge von 150 mm, einer Breite von 150 mm und einer Höhe von 300 mm bis zu 3600 (60 x 60) senkrechte Kanäle aufweisen, deren Kanalöffnungen einige Millimeter groß sind (etwa im Bereich zwischen 2 und 10 mm). Die Länge der Kanäle im Wabenkörper ist demnach 300 mm. Die freie offene Fläche für den Gasdurchtritt beträgt bei dem oben genannten Beispiel mehr als 60 % der Grundfläche des Absorberelements. Die Kanalstruktur wird möglichst dünnwandig gewählt, d.h. ca. 0,5 bis 0,9 mm, so dass eine sehr schnelle Wärmeaufnahme bei kurzer Lichtbogenzeit gewährleistet ist.

Insbesondere bei Schaltfeldern bzw. Schaltanlagen hoher Leistungsklassen kommt es zu Stromwärmeverlusten (im Normalbetrieb, ohne Störlichtbogen). Die beschriebene Anordnung hat einen geringen Strömungswiderstand beim Ausströmen der warmen Luft aus der Funktionseinheit durch die Kanäle des Absorberelements und ist somit ebenfalls zum Abbau der Stromwärme geeignet.

Keramische Absorberelemente haben gegenüber anderen Materialien den Vorteil, dass sie eine sehr hohe Temperaturwechselbeständigkeit aufweisen. Gleichzeitig gewährleistet ein sehr kleiner mittlerer Längenausdehnungskoeffizient von ca. 2,2 x 10⁻⁶ bis 6,5 x 10⁻⁶ K⁻¹ bei höchster Temperaturbeständigkeit maximalen Formschluss und nahezu keinem Abbrand des Oberflächenschutzes (wie zum Beispiel Zink auf Stahl). Keramische Absorberelemente sind gegen korrodierende Einflüsse beständig. Eine offene Porosität von ca. 8 bis 25 % sorgt für eine Verwirbelung des Gasstroms in den Kanälen des Absorberelements. Ein in den Kanälen poröses Material ist also einem porenfreien Material vorzuziehen.

Die Erfindung wird in den Zeichnungen näher erläutert. Sie zeigen im Einzelnen:

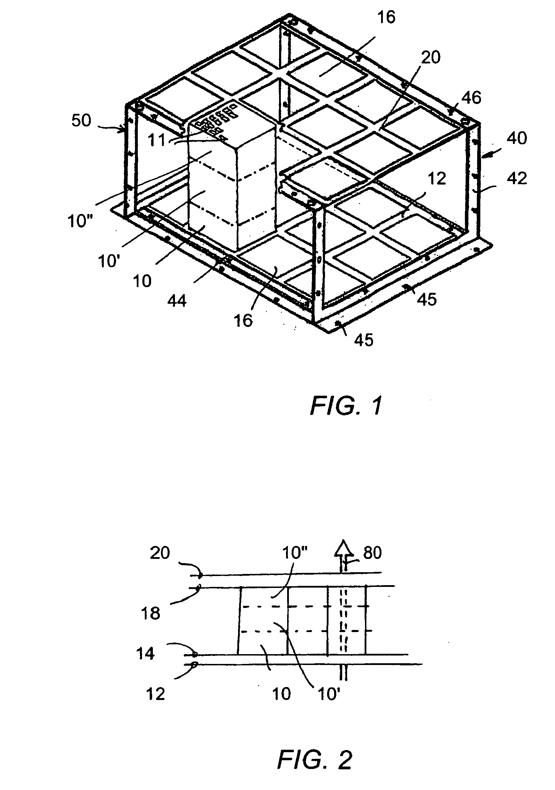

Fig. 1 Schemazeichnung einer aufgebrochenen Baueinheit zur Sichtbarmachung von Absorberelementen,
Fig. 2 schichtweiser Aufbau der Baueinheit und in den
Fig. 3 bis Fig. 7 verschiedene Lagen der Baueinheit bei verschiedenen Funktionseinheiten.

In den Figuren sind folgende Bauelemente der Baueinheit dargestellt:
- erstes Halteblech 12 unten, mit Gitterlöchern 16, verschraubt oder vernietet im Absorbergehäuse 40,
- erstes, unteres gelochtes Blech 14 (Streckmetall; optional),
- drei keramische Absorberelemente 10, 10', 10" mit senkrechten Kanälen 11,
- zweite, obere gelochte Abdeckung 18 (oder ebenfalls Streckmetall),
- zweites Halteblech 20 (mit Gitterlöchern 16) verschraubt oder vernietet im Absorbergehäuse (Kammer 40),
- Gehäuse mit gekanteten Seitenblechen 50.

Schematisch ist ein Stapel von 3 aufeinander liegenden Absorberelementen 10, 10', 10" gezeichnet. In dieser Ausbildung können 12 Absorberelemente in einer Ebene auf dem unteren Halteblech im Absorbergehäuse angeordnet werden. Je nach Leistungsbereich der Schaltanlage und der Größe der Kammer kann auch ein einziges monolithisches Absorberelement den gesamten Querschnitt der Kammer ausfüllen.

Eines der gitterförmigen Haltebleche 12 und 20 kann jedoch auch im Absorbergehäuse oben und unten integral vorhanden sein und zusammen mit den senkrechten Streben einen stabilen Gehäuserahmen bilden. Das Absorbergehäuse 40 besitzt einen gekanteten umlaufenden Blechfalz mit Befestigungsbohrungen 45 zur Verschraubung der Baueinheit in, auf oder an einer Funktionseinheit (GAS, LS). Das Blechmaterial und die Blechstärke können je nach dem geforderten Druckverhalten verschieden sein. Die Verschraubung an der Montagestelle kann durch einzelne Schrauben oder durch am Absorbergehäuse der Baueinheit angeschweißte Gewindebolzen realisiert werden. Möglich ist je nach Ausführung auch eine Verschraubung mit am Absorbergehäuse angeschweißten oder eingenieteten Muttern. Je nach Druckanforderung an den Aufbau ist eine Verschraubung mit im Gehäuseblech eingesetzten Käfigmuttern möglich.

Eine weitere Verschraubungsmöglichkeit für hohe Druckanforderungen bieten Gewindestangen oder Profile mit Gewinden, die auf dem Befestigungsfalz aufliegen und durch den Verbund eine sehr feste Verbindung mit der Funktionseinheit garantieren.

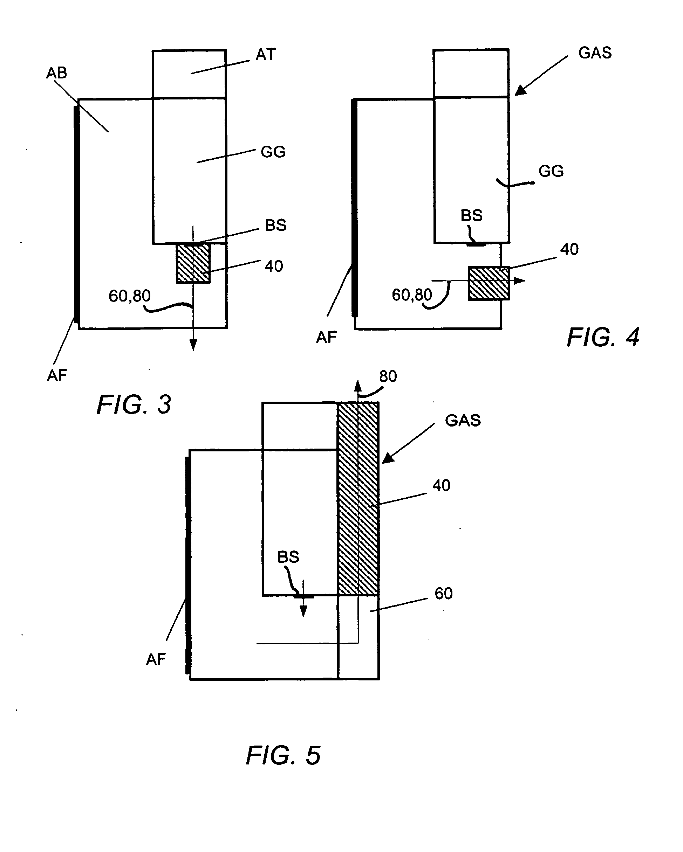

In gasisolierten Schaltanlagen und Schaltfeldern ist ein mehrstufiger Aufbau von Absorberelementen 40 möglich, wobei die Baueinheit direkt hinter der Berstscheibe BS des gasisolierten Schaltanlagen- oder Schaltfeldteils GAS positioniert sein kann und/oder auf der Rückseite oder in einem gesondert ausgebildeten Druckentlastungskanal 60 (siehe Fig. 3 bis Fig. 5).

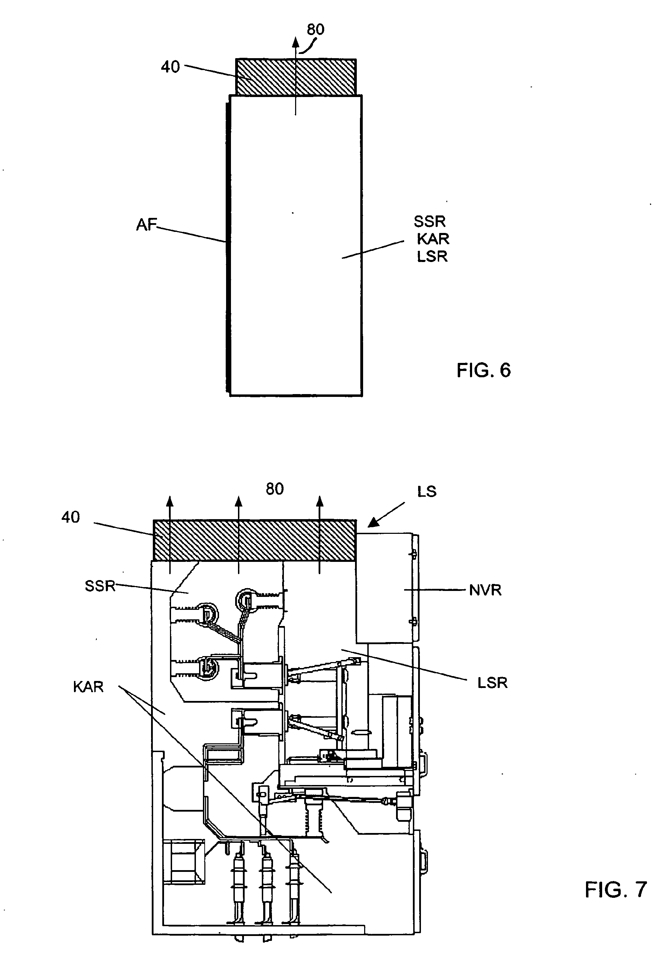

Beispiele für Anwendungen in luftisolierten Schaltfeldern LS werden in Fig. 6 und Fig. 7 gezeigt. Die Baueinheit ist zur Druckentlastung aus dem Schaltfeld auf dem oberen Feldabschluss montiert. Das Schaltfeld hat nur einen Schottraum (Fig. 6). Im Falle von Schaltfeldern mit mehreren Schotträumen (Fig. 7) wird eine komplette Einheit oder eine Einheit je Schottraum montiert.

Zu den Einzelheiten der Figuren 3 bis 7 wird noch auf die Liste der Bezugszeichen verwiesen, in der die Begriffe und Kürzel erläutert sind.

### Bezugszeichen

- 10: Absorberelemente (10, 10', 10")
- 11: Längskanal
- 12: erstes Halteblech
- 14: (optional) erstes gelochtes Blech oder Streckmetall-Platte
- 16: Gitterlöcher
- 18: (optional) gelochte Abdeckung (oder zweite Streckmetall-Platte)
- 20: zweites Halteblech
- 40: Kammer, Absorbergehäuse
- 42: Rahmen
- 44: Flansch
- 45: Bohrungen
- 46: Stehbolzen
- 50: Seitenblech
- 60: Abströmweg (Druckentlastungskanal)
- 80: Strömungsrichtung (Gasdurchtritt)
- AF: Anlagenfront
- NVR: Niederspannungsraum
- LSR: Leistungsschalterraum
- LS: Leistungsschalter
- KAR: Kabelanschlussraum
- SSR: Sammelschienenraum
- BS: Berstscheibe
- GAS: gasisolierte, hermetisch geschlossene Schaltanlage oder Schaltfeld
- GG: gasgefülltes Schaltgehäuse
- AB: Anschlussbereich
- AT: Antriebsbereich
- LS: luftisolierte Schaltanlage

## Patentansprüche

1. Baueinheit für die Aufnahme mindestens eines Elements (10,10', 10") für die Absorption oder Dämpfung austretender heißer Gase verursacht durch einen Lichtbogen in elektrischen Funktionseinheiten der Hoch- und Mittelspannung, insbesondere in Schaltanlagen, wobei für das Abströmen von Gas ein definierter Abströmkanal oder Abströmweg (60) vorgesehen ist und darin mindestens ein Absorptionselement (10, 10', 10") vorgesehen ist, wobei die Baueinheit eine im Abströmkanal oder Abströmweg (60) vorhandene Kammer (40) aufweist, die mit mindestens einem Absorptionselement (10,10', 10") gefüllt ist, **dadurch gekennzeichnet, dass** im Innern der Kammer (40) mindestens ein monolithisches, aus Keramik ausgebildetes Absorberelement (10, 10', 10") angeordnet ist und das Absorberelement (10, 10', 10") mit Kanälen (11) zum Durchtritt der Gase ausgestattet ist.

2. Baueinheit nach Anspruch 1, **dadurch gekennzeichnet, dass** das Material des Absorberelements (10, 10', 10") eine offene Porosität von 8 bis 25 % aufweist.

3. Baueinheit nach einem der vorhergehenden Ansprüche, **dadurch gekennzeichnet, dass** die Öffnungen der Kanäle (11) derart ausgebildet sind, dass sie Berührungsschutz (IP-Schutz) sicherstellen.

4. Baueinheit nach Anspruch 3, **dadurch gekennzeichnet, dass** der Querschnitt der Kanalöffnungen (11) im Bereich von 2 bis 10 mm liegt.

5. Baueinheit nach einem der vorhergehenden Ansprüche, **dadurch gekennzeichnet, dass** die Kanäle (11) in Richtung (80) der Hauptströmung der Gase verlaufen.

6. Baueinheit nach einem der vorhergehenden Ansprüche, **dadurch gekennzeichnet, dass** eine gelochte Abdeckung außen auf den Absorberelementen (10,10',10") angeordnet ist, deren Lochgröße derart ausgebildet ist, dass damit Berührungsschutz (IP-Schutz) erreicht wird.

7. Baueinheit nach einem der vorhergehenden Ansprüche, **dadurch gekennzeichnet, dass** die Absorberelemente (10, 10', 10") in der Kammer (40) mit Halteelementen (12, 20) gehalten werden.

8. Baueinheit nach einem der vorhergehenden Ansprüche, **dadurch gekennzeichnet, dass** auf der Seite des Eintritts der Gase in Absorberelemente (10,10',10") eine gelochte Metallplatte (14) angeordnet ist.

9. Baueinheit nach einem der vorhergehenden Ansprüche, **dadurch gekennzeichnet, dass** mehr als ein Absorberelement (10, 10', 10") hintereinander angeordnet sind.

10. Baueinheit nach Anspruch 9, **dadurch gekennzeichnet, dass** die Kanäle (11) von hintereinander angeordneten Absorberelementen (10,10',10") bei gleichem gesamten Strömungsquerschnitt abnehmende Querschnitte haben.

11. Baueinheit nach einem der vorhergehenden Ansprüche, **dadurch gekennzeichnet, dass** die Baueinheit (40) als kompakte Einheit hergestellt und mit Befestigungsmitteln (45, 46) für die Anbringung an Gehäuseteilen einer Funktionseinheit (LS, GAS) ausgestattet ist.

12. Baueinheit nach dem Anspruch 11, **dadurch gekennzeichnet, dass** die Baueinheit (40) in einem Rahmen fest als kompakte Einheit eingebracht ist, und der Rahmen über als Flanschverbindung ausgestaltete Befestigungsmittel mit Gehäuseteilen einer Funktionseinheit (LS, GAS) verbindbar ist.

13. Baueinheit nach einem der vorhergehenden Ansprüche, **dadurch gekennzeichnet, dass** die Baueinheit (40) direkt hinter der Berstscheibe (BS) einer gasisolierten Schaltanlage (GAS) angeordnet ist.

14. Baueinheit nach einem der Ansprüche 1 bis 12, **dadurch gekennzeichnet, dass** die Baueinheit (40) am Ende eines als Abströmweg (60) ausgebildeten Gehäuseteils einer Funktionseinheit (LS, GAS) angeordnet ist.

15. Baueinheit nach einem der vorhergehenden Ansprüche, **dadurch gekennzeichnet, dass** die Baueinheit (40) in und/oder an begehbaren und nicht begehbaren Stationen und Schaltanlagenräumen eingesetzt wird.

## Claims

1. A constructional unit to accommodate at least one element (10, 10', 10") for the absorption or damping of emerging hot gases caused by arcing in high and medium-voltage electrical functional units, particularly in switchgear, wherein a defined outlet channel or outlet path (60) for the discharge of gas is provided and at least one absorption element (10, 10', 10") is provided therein, wherein the constructional unit displays a chamber (40) present in the outlet channel or outlet path (60), which is filled with at least one absorption element (10, 10', 10"), **characterised in that** at least one monolithic absorber element (10, 10', 10") made from ceramic is disposed within the chamber (40) and the absorber element (10, 10', 10") is equipped with channels (11) for the passage of gases.

2. The constructional unit according to claim 1, **characterised in that** the material of the absorber element (10, 10', 10") has an open porosity of between 8 and 25%.

3. The constructional unit according to one of the preceding claims, **characterised in that** the openings in the channels (11) are designed so as to guarantee protection against accidental contact (IP).

4. The constructional unit according to claim 3, **characterised in that** the cross-section of the channel openings (11) is in the region of 2 to 10 mm.

5. The constructional unit according to one of the preceding claims, **characterised in that** the channels (11) run in the direction (80) of the main gas flow.

6. The constructional unit according to one of the preceding claims, **characterised in that** a perforated cover is disposed outside on the absorber elements (10, 10', 10"), the perforation size of which is designed so as to achieve protection against accidental contact (IP).

7. The constructional unit according to one of the preceding claims, **characterised in that** the absorber elements (10, 10', 10") are held in the chamber (40) with holding elements (12, 20).

8. The constructional unit according to one of the preceding claims, **characterised in that** a perforated metal plate (14) is located on the gas inlet side of the absorber elements (10, 10', 10").

9. The constructional unit according to one of the preceding claims, **characterised in that** more than one absorber element (10, 10', 10") is disposed in succession.

10. The constructional unit according to claim 9, **characterised in that** the channels (11) in absorber elements (10, 10', 10") disposed in succession have decreasing cross-sections with the same total flow cross-section.

11. The constructional unit according to one of the preceding claims, **characterised in that** the constructional unit (40) is produced as a compact unit and equipped with fixing means (45, 46) for attachment to the housing parts of a functional unit (LS, GAS).

12. The constructional unit according to claim 11, **characterised in that** the constructional unit (40) is rigidly inserted in a frame as a compact unit and the frame can be connected to housing parts of a functional unit (LS, GAS) via fixing means designed as a flange connection.

13. The constructional unit according to one of the preceding claims, **characterised in that** the constructional unit (40) is disposed right behind the blow-out disc (BS) of a piece of gas-insulated switchgear (GAS).

14. The constructional unit according to one of the claims 1 to 12, **characterised in that** the constructional unit (40) is disposed at the end of a housing part of a functional unit (LS, GAS) designed as an outlet path (60).

15. The constructional unit according to one of the preceding claims, **characterised in that** the constructional unit (40) is used in and/or on accessible and non-accessible stations and switchgear rooms.

## Revendications

1. Unité modulaire pour le logement d'au moins un élément (10, 10', 10'') pour l'absorption ou l'atténuation de gaz chauds sortant provoqués par un arc dans des unités fonctionnelles électriques de tension élevée et de tension moyenne, en particulier dans des installations de commutation, un canal d'évacuation défini ou un chemin d'évacuation défini (60) étant prévu pour l'évacuation de gaz et au moins un élément d'absorption (10, 10', 10'') étant prévu à l'intérieur, l'unité modulaire présentant une chambre (40) présente dans le canal d'évacuation ou le chemin d'évacuation (60), qui est remplie avec au moins un élément d'absorption (10, 10', 10''), **caractérisée en ce qu'**au moins un élément absorbeur (10, 10', 10'') monolithique, formé à base de céramique, est disposé à l'intérieur de la chambre (40) et l'élément absorbeur (10, 10', 10'') est conçu avec des canaux (11) pour le passage des gaz.

2. Unité modulaire selon la revendication 1, **caractérisée en ce que** le matériau de l'élément absorbeur (10, 10', 10'') présente une porosité ouverte de 8 à 25 %.

3. Unité modulaire selon l'une quelconque des revendications précédentes, **caractérisée en ce que** les ouvertures des canaux (11) sont conçues de telle sorte qu'elles garantissent une protection contre le contact (protection par revêtement).

4. Unité modulaire selon la revendication 3, **caractérisée en ce que** la section des ouvertures de canal (11) se situe dans la plage de 2 à 10 mm.

5. Unité modulaire selon l'une quelconque des revendications précédentes, **caractérisée en ce que** les canaux (11) sont agencés en direction (80) de l'écoulement principal des gaz.

6. Unité modulaire selon l'une quelconque des revendications précédentes, **caractérisée en ce qu'**un revêtement perforé est disposé à l'extérieur sur les éléments absorbeurs (10, 10', 10''), dont la grandeur de trou est conçue de telle sorte qu'on obtient ainsi une protection contre les contacts accidentels (protection par revêtement).

7. Unité modulaire selon l'une quelconque des revendications précédentes, **caractérisée en ce que** les éléments absorbeurs (10, 10', 10'') sont maintenus dans la chambre (40) avec des éléments de retenue (12, 20).

8. Unité modulaire selon l'une quelconque des revendications précédentes, **caractérisée en ce qu'**une plaque métallique (14) perforée est disposée sur le côté de l'entrée des gaz dans des éléments absorbeurs (10, 10', 10'').

9. Unité modulaire selon l'une quelconque des revendications précédentes, **caractérisée en ce que** plusieurs éléments absorbeurs (10, 10', 10'') sont disposés les uns derrière les autres.

10. Unité modulaire selon la revendication 9, **caractérisée en ce que** les canaux (11) d'éléments absorbeurs (10, 10', 10'') disposés les uns derrière les autres ont des sections qui diminuent pour une section d'écoulement globale identique.

11. Unité modulaire selon l'une quelconque des revendications précédentes, **caractérisée en ce que** l'unité modulaire (40) est fabriquée sous forme d'unité compacte et est équipée de moyens de fixation (45, 46) pour le placement sur des parties de boîtier d'une unité fonctionnelle (LS, GAS).

12. Unité modulaire selon la revendication 11, **caractérisée en ce que** l'unité modulaire (40) est introduite dans un cadre de façon fixe comme unité compacte, et le cadre peut être relié par des moyens de fixation conçus comme assemblage par bride avec des parties de boîtier d'une unité fonctionnelle (LS, GS).

13. Unité modulaire selon l'une quelconque des revendications précédentes, **caractérisée en ce que** l'unité modulaire (40) est disposée directement derrière le disque de rupture (BS) d'une installation de commutation (GAS) isolée des gaz.

14. Unité modulaire selon l'une quelconque des revendications 1 à 12, **caractérisée en ce que** l'unité modulaire (40) est disposé sur l'extrémité d'une partie de boîtier conçue comme chemin d'évacuation (60) d'une unité fonctionnelle (LS, GS).

15. Unité modulaire selon l'une quelconque des revendications précédentes, **caractérisée en ce que** l'unité modulaire (40) est utilisée dans et/ou sur des stations et locaux d'installation de commutation praticables et non praticables.
